# EUROPEAN PATENT SPECIFICATION

(11) **EP 4 520 994 B1**
(45) Date of publication and mention of the grant of the patent: **08.04.2026**
(21) Application number: 23195574.1
(22) Date of filing: 06.09.2023
(51) Int. Cl.: F16D 65/00

(54) **BRAKE DUST FILTER SYSTEM**
BREMSSTAUBFILTERSYSTEM
SYSTÈME DE FILTRE À POUSSIÈRE DE FREIN

(43) Date of publication of application: 12.03.2025
(73) Proprietor: MANN+HUMMEL GmbH, 71636 Ludwigsburg (DE)
(72) Inventor: WÖRZ, Tobias, 71636 Ludwigsburg (DE); SCHLEIDEN, Thomas, 71636 Ludwigsburg (DE); BECK, Andreas, 71636 Ludwigsburg (DE); WELLER, Benedikt, 71636 Ludwigsburg (DE); JESSBERGER, Thomas, 71636 Ludwigsburg (DE)
(74) Representative: Mann + Hummel Intellectual Property

(56) References cited:
- CN-A- 103 511 137
- US-A1- 2010 139 033
- US-A1- 2013 105 252
- US-A1- 2020 355 230
- US-A1- 2022 252 117

## Description

### TECHNICAL FIELD

The present invention refers to a brake dust filter system for a vehicle, the brake dust filter system comprising:
at least one suction port configured to be positioned near a wheel brake assembly of the vehicle in an installed state of the brake dust filter system;
a duct arrangement;
an airflow generation device configured to generate an airflow from the at least one suction port through the duct arrangement towards the airflow generation device; and
a particle filter element fluidically coupled to the duct arrangement and arranged downstream of the at least one suction port.

### BACKGROUND ART

A brake dust filter system of this kind is known e.g. from EP 2 585 730 B1.

Brake dust filters are used to capture brake dust emerging from wheel brakes of vehicles. By capturing the brake dust, staining of components arranged adjacent to the wheel brake, such as rims, can be avoided. Furthermore, pollution of the environment by the brake dust can be reduced. Release of brake dust into the environment is increasingly seen as problematic, since brake dust contributes to the fine dust emission of the vehicle, which is considered harmful for living beings.

Passive brake dust filters use the immanent airflow caused by the motion of the vehicle or the rotation of the brakes to direct brake dust laden air through a filter device. Active brake dust filter systems use additional devices, such as impellers, to force the brake dust particle laden airflow through a filter device.

US 9,726,241 B2 discloses a nonpolluting brake assembly comprising a rotor, a pad comprising friction material capable of releasing particles resulting from abrasion, an autonomous suction device for drawing off said particles which comprises an intake opening arranged in the immediate vicinity of the pad and the rotor, a collection chamber for collecting the particles, an impeller driven by the rotor by means of a roller pressing on the rotor, for drawing off the particles through the opening and propelling them into the collection chamber, such that the particles are trapped as close as possible to their emission. The collection chamber may comprise a filter of fibrous media.

EP 2 084 423 B1 describes a filter arrangement for brake dust retention systems on braking devices for motor vehicle wheels, with a suction device on the respective braking device and with a filter element in the suction path for the air enriched with the brake dust. In order to achieve a simple and inexpensive solution also with regard to the maintenance of the filter arrangement, a filter element already present in the motor vehicle, namely an exhaust gas filter or a filter for the interior ventilation, is used as a filter element to form a common one-piece filter element.

EP 2 585 730 B1, already mentioned above, discloses a disc brake comprising a brake caliper, which overlaps a brake disc and in which are arranged brake pads provided with friction linings, each of which can be pressed with its friction lining on both sides against friction rings of the brake disc, the friction rings being covered outside the region of overlap of the friction linings by a housing, which is stationary with respect to the brake caliper and is connected to a suction device. The housing consists of two covering parts covering the respective friction ring in the manner of hoods, and a dust removal device is provided between the housing and the suction device. The dust removal device arranged between the suction device and the housing preferably consists of a coarse dust separator arranged first in the direction of the housing, through which the contaminated, extracted air is led to a fine dust filter, which is connected upstream of the suction device, preferably a suction fan, while a muffler is provided downstream of the suction fan, through which the purified air is led outside.

US 2022/252117 AI describes a separating device that receives via a lower inlet an air flow laden with impurities, namely dust produced by pads of a brake assembly, and makes it possible to separate and collect heavy dust. The housing of the device contains a multi-cyclone cluster, with cyclones distributed annularly and supplied tangentially by a central collector surmounting an axial duct communicating with the inlet. The centrifuged and separated liquid and solid particles are directly collected below the cyclones in a trapping zone around the duct, the cluster forming a transverse barrier connected in a sealed manner to the duct so as to prevent the liquid collected in the trapping zone from rising towards a downstream zone, only gravity discharge orifices of the cyclones allowing the trapping zone to be filled during the operation of the device.

It is an object of the invention to provide a brake dust filter system with high dust retention efficiency, which requires little maintenance.

This is achieved by a brake dust filter system according to claim 1. Advantageous embodiments are given in the subclaims and the description.

### SUMMARY

In accordance with the invention, a brake dust filter system for a vehicle is provided. The vehicle can be e.g. a road vehicle, a rail vehicle, or an airplane. The vehicle generally has wheels. Generally, the vehicle has at least one wheel brake assembly, typically one wheel brake assembly per wheel. The wheel brake assembly can comprise drum brakes as well as disc brakes.

The brake dust filter system comprises at least one suction port configured to be positioned near a wheel brake assembly of the vehicle in an installed state of the brake dust filter system. Preferably, the at least one suction port is arranged at a suction bracket at least partially engaging around a brake disk. In particular, the suction bracket can be part of a brake caliper or can be mounted to a brake caliper.

The brake dust filter system further comprises a duct arrangement and an airflow generation device configured to generate an airflow from the at least one suction port through the duct arrangement towards the airflow generation device. In other words, the airflow generation device is configured to generate an airflow that allows sucking particles generated by the wheel brake assembly into the at least one suction port. The duct arrangement fluidically couples the at least one suction port and the airflow generation device. The airflow generation device, which is connected to the at least one suction port, significantly reduces the amount of brake dust particles that may escape into the environment. The duct arrangement comprises at least one air duct (e.g. a pipe or a hose). The airflow generation device may be a suction pump. The airflow generation device may comprise an impeller.

The brake dust filter system comprises a particle filter element fluidically coupled to the duct arrangement and arranged downstream of the at least one suction port. The filter element may comprise a filter medium body of pleated filter paper. Alternatively or additionally, the filter element may comprise a filter medium body of porous foam. The particle filter element is arranged such that the airflow passes through the particle filter element. The particle filter element is configured to retain at least a portion of particles contained in the airflow out of said the airflow.

The airflow generation device may be arranged upstream of the particle filter element. In this embodiment, the duct arrangement extends beyond the airflow generation device in flow direction.

However, the airflow generation device is preferably arranged downstream of the particle filter element. In this embodiment, the airflow generation device is exposed to few brake dust particles (preferably, only a negligible amount of brake dust particles passes the particle filter element). Consequently, wear and tear of the airflow generation device is reduced.

The particle filter element may comprise a coarse filter medium body and a fine filter medium body arranged downstream of the coarse filter medium body. In this way, a particular high retention rate of even very small brake dust particles (e.g. having an equivalent diameter of less than 1 µm) can be obtained.

According to the invention, the brake dust filter system comprises an inertial separator fluidically coupled to the duct arrangement and arranged upstream of the particle filter element and downstream of the at least one suction port. The inertial separator comprises:
a raw air inlet for the airflow from the at least one suction port;
at least one particle outlet for particles that are separated from the airflow by the intertial separator; and
at least one air outlet for the airflow towards the particle filter element.

The inertial separator reduces the amount of larger brake dust particles (e.g. having an equivalent diameter of more than 1 µm, in particular more than 2.5 µm), which are led to the particle filter element. These larger particles would clog the particle filter element in relatively short time. Thus, by providing the inertial separator, service intervals can be prolonged, and maintenance cost can be reduced.

The raw air inlet serves to connect the inertial separator to the at least one suction port. Preferably, one air duct is arranged between each suction port and each raw air inlet. It is understood that multiple suction ports can be connected to one common raw air inlet using appropriate ducting.

Particles separated from the airflow in the inertial separator are ejected through the at least one particle outlet. Thus, these particles do not accumulate inside the inertial separator and do not clog the inertial separator.

The airflow purified from the larger particles is fed to the particle filter element through the at least one air outlet. Preferably, one air duct to the particle filter element is provided for each air outlet of the inertial separator. Multiple air outlets at the inertial separator and air ducts to the particle filter element may increase the separation efficiency of the inertial separator and/or the particle filter element.

The at least one particle outlet is connected to a particle collection chamber. Brake dust particles, which have been separated from the airflow in the inertial separator, enter the particle collection chamber through the at least one particle outlet and they are retained inside the particle collection chamber. Preferably, the particle collection chamber is arranged below the inertial separator. This simplifies guiding the particles into the particle collection chamber. The particles may just fall into the particle collection chamber due to gravitation.

The particle collection chamber may have a volume of at least 0.3 l, preferably at least 0.4 l, particularly preferably at least 0.5 l. The particle collection chamber may have a volume of at most 1 l, preferably at most 0.75 l. These volumes have been found to allow for reasonable intervals, e.g. every 25.000 km for a road vehicle, between emptying the particle collection chamber, while keeping its dimensions limited. For railway application the chamber volume can be up to 3 L.

In summary, by providing the inertial separator, which removes in particular larger particles form the airflow, the efficiency of the brake dust filter system can be increased. In particular, particle filter elements, which are capable of retaining very fine particles, can be employed without and excessive clogging of the particle filter element and without the need for frequent replacement thereof.

A vehicle comprising the brake dust filter system may have one such system per axis or one system for all of its wheels. A brake system comprising at least one wheel brake assembly and the brake dust filter system may have one such brake dust filter system for one wheel brake assembly, for two-wheel brake assemblies or for four-wheel brake assemblies.

According to the invention, the inertial separator is received in a separator housing, and the separator housing comprises the raw air inlet and the at least one air outlet. This facilitates connecting the inertial separator to the at least one suction port, to the particle filter element and to the particle collection chamber. The raw air inlet and the at least one air outlet may be provided as ports, which are coupled to the duct arrangement.

In a particularly preferred embodiment, the separator housing comprises a detachable cover for the particle collection chamber. This facilitates emptying the particle collection chamber during routine maintenance. Preferably, the cover is screwed to a housing body of the separator housing. The cover and the housing body may each comprise mating threads.

According to the invention, the raw air inlet and the at least one air outlet are comprised at an upper side of the separator housing. This arrangement requires the airflow to change its direction inside the separator housing, which supports the separation efficiency of the inertial separator. Further, with the at least one air outlet being arranged above the inertial separator and the particle collection chamber being arranged below the inertial separator, the risk of particles, which have already been separated from the airflow, being sucked out of the particle collection chamber and fed to the particle filter element is significantly reduced.

The particle filter element may be received in a filter housing, and the filter housing comprises at least one connection port coupled to the duct arrangement. Preferably, multiple connection ports are provided at the filter housing. Multiple connection may contribute to establish a uniform flow pattern through the particle filter element. This allows better exploiting the entire particle accumulation capacity of the particle filter element.

The airflow generation device may be attached to the filter housing. It is also conceivable, that the airflow generation device be received inside the filter housing, in particular downstream of the particle filter element.

In a particularly preferred embodiment, the inertial separator comprises at least one cyclone separator. Cyclone separators have been found to be efficient in separation of brake dust particles. Further, it was found that the separation efficiency of cyclone separators does not significantly decrease upon permanent exposure to brake dust. The cyclone separator may be an axial cyclone separator or a tangential cyclone separator. In an axial cyclone separator, the inflow of air is in axial direction of the cyclone. In a tangential cyclone separator, the inflow of air is in tangential direction of the cyclone.

Preferably, the raw air inlet is fluidically coupled to multiple cyclone separators through multiple flow windows, wherein the cyclone separators are arranged around the raw air inlet. In other words, one raw air inlet or the one raw air inlet is surrounded by multiple flow windows and by multiple cyclone separators. In particular, multiple cyclone separators and flow windows are provided for each raw air inlet. One or multiple flow windows may be provided per cyclone separator. This design provides for a particular high separation efficiency in the inertial separator.

Another preferred embodiment provides that the inertial separator comprises a nozzle structure, which is fluidically coupled to the raw air inlet, and at least one baffle structure, which is arranged to be encountered by the (particle-laden) airflow after passing through the nozzle structure. The at least one baffle structure may be referred to as a structure deflector plate. The nozzle structure accelerates the particle-laden airflow passing through its nozzle holes. When the airflow with the particles encounters the at least one baffle structure, the (heavy) particles hit the so-called structure deflector plate, while the airflow (without heavy particles or at least with less particles) is directed to the at least one air outlet.

A diameter of nozzle holes of the nozzle structure is preferably at least 2 mm and/or at most 3 mm. A distance of the at least one baffle structure to the nozzle structure (measured in flow direction of the airflow through the nozzle holes) may be at least 1 mm and/or at most 3 mm, preferably 2 mm. It has been found that these dimensions allow for a high separation efficiency, which is maintained during continuous exposure of the inertial separator to brake dust.

The at least one baffle structure may comprise spikes facing towards the nozzle structure. The spikes provide for an efficient deceleration of the brake dust particles, while allowing the air to travel along the spiked surface of the at least one baffle structure. This design further increases the separation efficiency of the inertial separator.

The nozzle structure may comprise a center pipe with radially oriented nozzle holes, preferably wherein the center pipe has a polygonal, e.g. hexagonal, cross section. Compact outer dimensions of an inertial separator can be obtained with this design, while the inertial separator allows for high volume flow and high separation rates. The center pipe is generally closed at its axial end remote from the raw air inlet. Thus, the airflow is forced to pass through the nozzle holes.

The at least one baffle structure may surround the center pipe, preferably wherein multiple baffle plates are arranged in a polygonal, e.g. hexagonal, shape. A basically square angle of incidence of the airflow passing through each of the nozzle holes on the associated baffle plate can be established with this design. Thereby, the efficacy of the at least one baffle structure in decelerating the brake dust particles is enhanced.

### BRIEF DESCRIPTION OF DRAWINGS

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
Fig. 1 shows a brake dust filter system according to the invention arranged at two disk brakes, in a schematic perspective view.
Fig. 2 shows a particle filter element and an airflow generation device of the brake dust filter system of Fig. 1, in a schematic partially sectional view.
Fig. 3 shows an inertial separator of the brake dust filter system of Fig. 1, in a schematic side view, wherein the inertial separator is a multi-cyclone separator.
Fig. 4 shows the inertial separator of Fig. 3 in a schematic sectional view.
Fig. 5 shows an inertial separator for a brake dust filter system according to the invention, in a schematic sectional view, wherein the inertial separator comprises a nozzle structure and a baffle structure.
Fig. 6 shows the inertial separator of Fig. 5 in a schematic perspective view, wherein a cover of a particle collection chamber has been removed.

### DETAILED DESCRIPTION

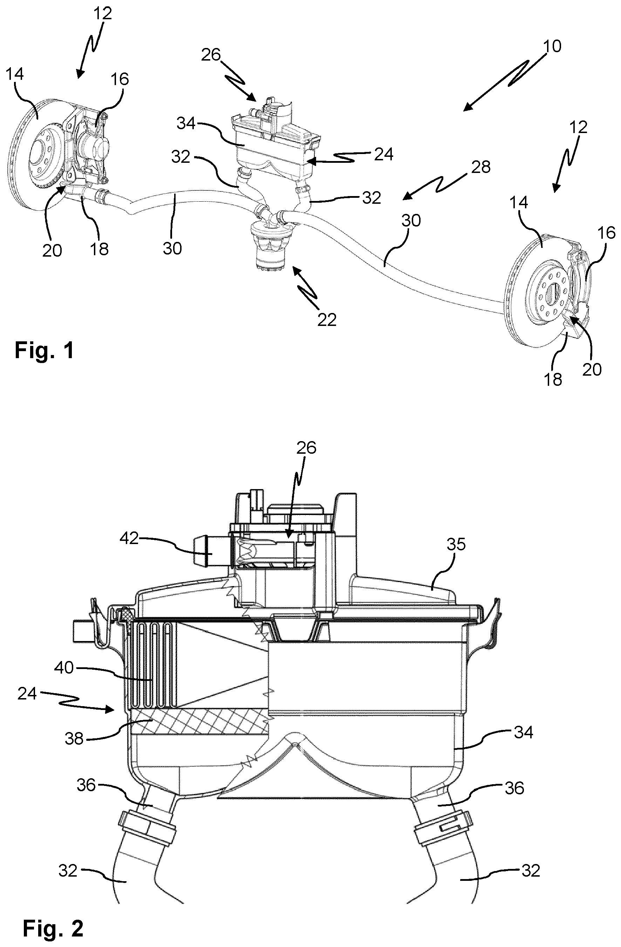

Figure 1 shows a brake dust filter system 10 arranged at two-wheel brake assemblies 12, which are disk brakes in the depicted embodiment. The wheel brake assemblies 12 are part of a vehicle having wheels, such as a passenger car (not depicted). The wheel brake assemblies 12 each comprise a brake disk 14 and a caliper 16 engaging around the associated brake disk 14.

A suction bracket 18 of the brake dust filter system 10 is attached to each of the brake calipers 16 and engages around the associated brake disk 14. Each suction bracket 18 provides two suction ports 20 arranged on either side of the brake disk 14. The suction brackets 18 with the suction ports 20 are arranged behind the brake calipers 16 with respect to a usual direction of rotation of the brake disk 14 (vehicle traveling forward).

The brake dust filter system 10 further comprises an inertial separator 22, a particle filter element 24 and an airflow generation device 26. A duct arrangement 28 comprising several air ducts 30, 32, here flexible hoses, fluidically connects the suction brackets 18 to the inertial separator 22 and the inertial separator 22 to the partricle filter element 24.

In the depicted embodiment, the airflow generation device 26 is contained in a filter housing 34 of the particle filter element 24, see also Figure 2. The filter housing 34 has a detachable housing cover 35, to which the airflow generation device 26 is attached. The airflow generation device 26, here a scution pump, is arranged downstream of the particle filter element 24.

In this embodiment, the filter housing 34 has two connection ports 36 which each receive one of the air ducts 32, which lead pre-cleaned air from the inertial separator 22 to the particle filter element 24.

In the depicted embodiment, the particle filter element 24 comprises a coarse filter medium body 38, for instance a foam body, and a fine filter medium body 40, for instance made from pleated filter paper. The filter media bodies 38, 40 are arranged in series with the coarse fitler mediumg body 38 upstream of the fine filter medium body 40.

Purified air is released into the environment through a clean air outlet 42, which is arranged downstream of the particle filter element 24 and the airflow generation device 26.

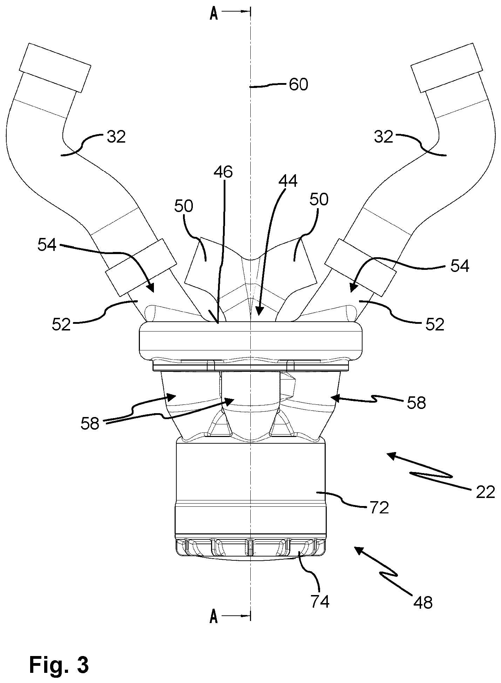

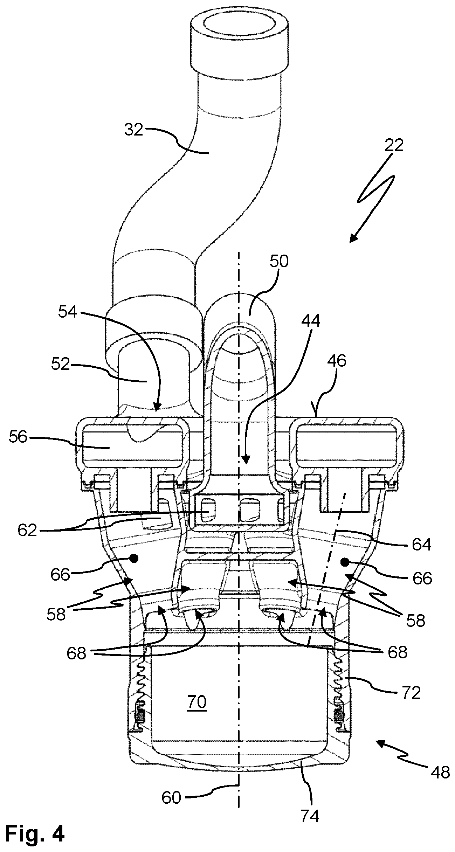

Figures 3 and 4 show the inertial separator 22 in an enlarged side view or sectional view, respectively.

A raw air inlet 44 is provided at the center of an upper side 46 of a separator housing 48. In this embodiment, the raw air inlet 44 comprises two inlet ports 50 each for connecting one of the air ducts 30 coming from the suction ports 20.

In the depicted embodiment, the two air ducts 32 leading to the particle filter element 24 are each connected to an outlet port 52. Each outlet port 52 defines an air outlet 54 for the airflow, form which in particular large particles have been removed in the inertial separator 22. Both air outlets 54 are in fluidic communication with an annular outlet chamber 56 at top of the separator housing 48, cf. Figure 4. The outlet chamber 56 is arranged just below the upper side 46 of the separator housing 48 with the outlet ports 52 protruding from the upper side 46.

In the embodiment of Figures 3 and 4, the inertial separator 22 comprises several, here six, cyclone separators 58. The cyclone separators 58 are arranged around the raw air inlet 44 with respect to a central (vertical) axis 60 of the separator housing 48. For each of the cyclone separators 58, at least one flow window 62 provides fluid communication to the raw air inlet 44, see Figure 4.

The raw airflow from the suction ports 20 enters the cyclone separators 58 in a basically tangential direction with respect to an axis 64 of a downwardly tapered cyclone chamber 66 of the cyclone separators 58. A spiral downward oriented flow pattern evolves in each cyclone separator 58. Especially heavy brake dust particles are pressed aigainst the walls of the cyclone chambers 66, which results in deceleration of the particles. For each cyclone separator 58, a particle outlet 68 is provided at a lower end of the respective cyclone chamber 66. Under the influence of gravity, the particles will fall through the particle outlets 68 into a common particle collection chamber 70. The purified air rises in a central region of the cyclone chambers 66, enters the annular outlet chamber 56 and is sucked towards the particle filter element 24 (see Figures 1 and 2) by the airflow generation device 26.

The particle collection chamber 70 is formed in the separator housing 48 and is arranged below the cyclone separators 58. In the depicted embodiment, the separator housing 48 comprises a housing body 72 and a cover 74. Mating threads are provided on the housing body 72 and the cover 74. In the mounted state, the cover 74 closes the particle collection chamber 70 at the bottom. When the cover 74 is unscrewed from the housing body 72, the particle collection chamber 70 can be emptied.

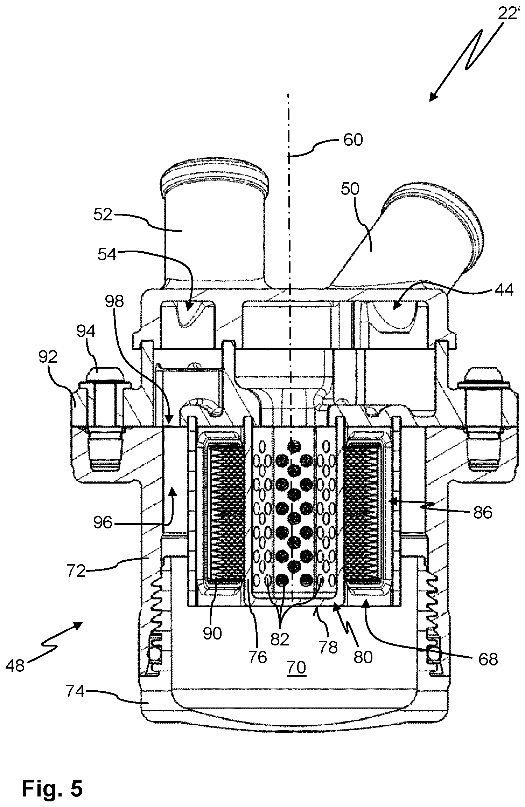

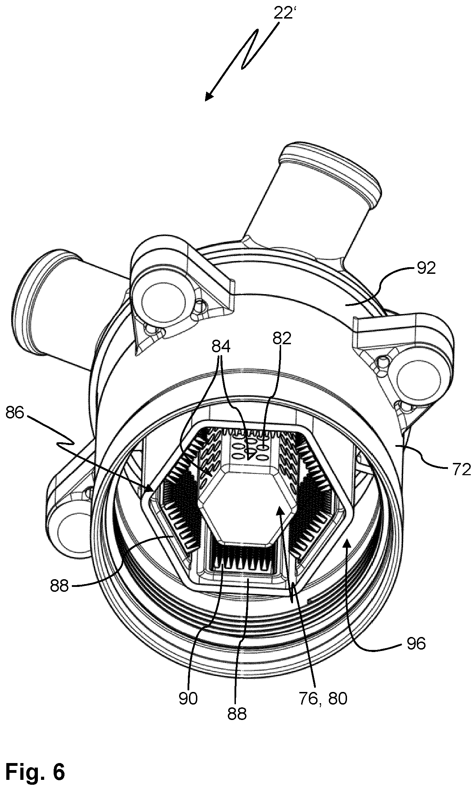

Figures 5 and 6 show an inertial separator 22', which can be used instead of inertial separator 22 with the brake dust filter system 10 of Figure 1.

In the embodiment of Figures 5 and 6, the raw airflow from the suction ports 20 is fed into a center pipe 76 through two raw air inlets 44 (one of which is visible in Figure 5; note that the inertial separator 22' is symmetrical to the section plane (drawing plane) of Figure 5). The center pipe 76 extends along axis 60 and is closed at its lower end 78. In this embodiment, the center pipe 76 has a hexagonal cross section, cf. Figure 6.

The center pipe 76 provides a nozzle structure 80. Nozzle holes 82 are provided on side faces 84 of the center pipe 76.

A baffle structure 86 surrounds the center pipe 76. In this embiment, the baffle structure 86 comprises six baffle plates 88. Here, the baffle structure 86 is designed as a cricumferentially closed baffle pipe with polygonal cross section, which baffle pipe surronds the center pipe 76. The baffle plates 88 are mounted or formed inside the baffle pipe. Each baffle plate 88 has a multitude of spikes 90 facing towards the center pipe 76.

The raw airflow, which is fed into the center pipe 76, is accelerated through the nozzle holes 82 towards the baffle structure 86. Especially heavy brake dust particles will hit the baffle plates 88 and are decelerated by contact with the spikes 90. An annular pariticle outlet 68 is formed between the center pipe 76 and the baffle structure 86 at their lower ends. The particles fall through the particle outlet 68 and are collected in a particle collection chamber 70.

As in the embodiment of Figures 3 and 4, the particle collection chamber 70 is defined by a cover 74, which is screwed to a housing body 72 of separator housing 48.

An upper housing part 92 may be fixed to the housing body 72, e.g. by means of bolts 94. The nozzle structure 80 and the baffle structure 86 are fixed to the upper housing part 92, e.g. glued or welded.

With inertial separator 22', the airflow is directed through the particle outlet 68 into the particle collection chamber 70. From the particle collection chamber 70, the air containing less particles rises into an annular space 96, which is formed between the radially outer side of the baffle structure 86 and the inner side of the housing body 72. From the annular space 96, the pre-cleaned airflow enters into the upper housing part 92 at a passage 98, see Figure 5. From there, the airflow is sucked to the particle filter element 24 through the air outlets 54, as described above.

In summary, the invention relates to an active brake dust filter system. An airflow containing brake dust particles is sucked into a duct arrangement by an airflow generation device. The airflow is first entered into an inertial separator. At least part of the brake dust particles, in particular a heavy fraction of the brake dust particles, is separated from the airflow in the inertial separator and expelled into a particle collection chamber. Secondly, the airflow containing less brake dust particles is led through a particle filter element to remove even more brake dust particles from the airflow. The cleaned airflow may be released into an environment. The ineratial separator reduces the amount of particles to be captured by the particle filter element. This allows to use a particle filter element capable of retaining even small brake dust particles while maintaining reasonably long service intervalls for exchanging the particle filter element. The particles collection chamber may be emptied during service.

### REFERENCE SIGNS LIST

Brake dust filter system 10
Wheel brake assemblies 12
Brake disk 14
Caliper 16
Suction bracket 18
Suction port 20
Inertial separator 22; 22'
Particle filter element 24
Airflow generation device 26
Duct arrangement 28
Air ducts 30, 32
Filter housing 34
Housing cover 35
Connection ports 36
Coarse filter medium body 38
Fine filter medium body 40
Clean air outlet 42
Raw air inlet 44
Upper side 46
Separator housing 48
Inlet ports 50
Outlet port 52
Air outlet 54
Outlet chamber 56
Cyclone separators 58
Axis 60 of the separator housing 48
Flow window 62
Axis 64 of a tapered cyclone chamber 66
Tapered cyclone chamber 66
Particle outlet 68
Particle collection chamber 70
Housing body 72
Cover 74
Center pipe 76
Lower end 78
Nozzle structure 80
Nozzle holes 82
Side faces 84
Baffle structure 86
Baffle plates 88
Spikes 90
Upper housing part 92
Bolts 94
Annular space 96
Passage 98

## Claims

1. A brake dust filter system (10) for a vehicle, the brake dust filter system (10) comprising:
at least one suction port (20) configured to be positioned near a wheel brake assembly (12) of the vehicle in an installed state of the brake dust filter system (10);
a duct arrangement (28);
an airflow generation device (26) configured to generate an airflow from the at least one suction port (20) through the duct arrangement (28) towards the airflow generation device (26);
a particle filter element (24) fluidically coupled to the duct arrangement (28) and arranged downstream of the at least one suction port (20); and
an inertial separator (22; 22') fluidically coupled to the duct arrangement (28) and arranged upstream of the particle filter element (24) and downstream of the at least one suction port (20), the inertial separator (22; 22') comprising:
a raw air inlet (44) for the airflow from the at least one suction port (20);
at least one particle outlet (68) for particles that are separated from the airflow by the inertial separator (22; 22'); and
at least one air outlet (54) for the airflow towards the particle filter element (24),
wherein the particle outlet (68) is connected to a particle collection chamber (70),
wherein the inertial separator (22; 22') is received in a separator housing (48), and wherein the separator housing (48) comprises the raw air inlet (44) and the at least one air outlet (54); and
**characterized in that**
the raw air inlet (44) and the at least one air outlet (54) are comprised at an upper side (46) of the separator housing (48).

2. The brake dust filter system (10) according to claim 1, wherein the particle collection chamber (70) is arranged below the inertial separator (22; 22').

3. The brake dust filter system (10) according to one of the preceding claims, wherein the separator housing (48) comprises a detachable cover (74) for the particle collection chamber (70).

4. The brake dust filter system (10) according to one of the preceding claims, wherein the airflow generation device (26) is arranged downstream of the particle filter element (24).

5. The brake dust filter system (10) according to one of the preceding claims, wherein the particle filter element (24) comprises a coarse filter medium body (38) and a fine filter medium body (40) arranged downstream of the coarse filter medium body (38).

6. The brake dust filter system (10) according to one of the preceding claims, wherein the particle filter element (24) is received in a filter housing (34), and
the filter housing (34) comprises at least one connection port (36) coupled to the duct arrangement (28).

7. The brake dust filter system (10) according to one of the preceding claims, wherein the at least one suction port (20) is arranged at a suction bracket (18) at least partially engaging around a brake disk (14).

8. The brake dust filter system (10) according to one of the preceding claims, wherein the inertial separator (22) comprises at least one cyclone separator (58).

9. The brake dust filter system (10) according to claim 8, wherein the raw air inlet (44) is fluidically coupled to multiple cyclone separators (58) through multiple flow windows (62), and
the multiple cyclone separators (58) are arranged around the raw air inlet (44).

10. The brake dust filter system (10) according to one of the preceding claims, wherein the inertial separator (22') comprises a nozzle structure (80) fluidically coupled to the raw air inlet (44), and at least one baffle structure (86) arranged to be encountered by the airflow after passing through the nozzle structure (80).

11. The brake dust filter system (10) according to claim 10, wherein the nozzle structure (80) comprises a center pipe (76) with radially oriented nozzle holes (82).

12. The brake dust filter system (10) according to claim 11, wherein the at least one baffle structure (86) surrounds the center pipe (76).

13. The brake dust filter system (10) according to one of claims 10 to 12, wherein the at least one baffle structure (86) comprises spikes (90) facing towards the nozzle structure (80).

## Patentansprüche

1. Bremsstaubfiltersystem (10) für ein Fahrzeug, das Bremsstaubfiltersystem (10) umfassend:
mindestens eine Saugöffnung (20), die so konfiguriert ist, dass sie in einem Einbauzustand des Bremsstaubfiltersystems (10) in der Nähe einer Radbremsanlage (12) des Fahrzeugs positioniert ist;
eine Kanalanordnung (28);
eine Luftstromerzeugungseinrichtung (26), die so konfiguriert ist, dass sie einen Luftstrom von der mindestens einen Saugöffnung (20) durch die Kanalanordnung (28) in Richtung der Luftstromerzeugungseinrichtung (26) erzeugt;
ein Partikelfilterelement (24), das fluidisch mit der Kanalanordnung (28) gekoppelt und stromabwärts von der mindestens einen Saugöffnung (20) angeordnet ist; und
einen Trägheitsabscheider (22; 22'), der fluidisch mit der Kanalanordnung (28) gekoppelt und stromaufwärts des Partikelfilterelements (24) und stromabwärts der mindestens einen Saugöffnung (20) angeordnet ist, wobei der Trägheitsabscheider (22; 22') umfasst:
einen Rohlufteinlass (44) für den Luftstrom aus der mindestens einen Saugöffnung (20);
mindestens einen Partikelauslass (68) für Partikel, die durch den Trägheitsabscheider (22; 22') aus dem Luftstrom abgeschieden werden; und
mindestens einen Luftauslass (54) für den Luftstrom zum Partikelfilterelement (24),
wobei der Partikelauslass (68) mit einer Partikelsammelkammer (70) verbunden ist,
wobei der Trägheitsabscheider (22; 22') in einem Abscheidergehäuse (48) aufgenommen ist, und wobei das Abscheidergehäuse (48) den Rohlufteinlass (44) und den mindestens einen Luftauslass (54) umfasst; und
**dadurch gekennzeichnet, dass**
der Rohlufteinlass (44) und der mindestens eine Luftauslass (54) an einer Oberseite (46) des Abscheidergehäuses (48) angeordnet sind.

2. Bremsstaubfiltersystem (10) nach Anspruch 1, wobei die Partikelsammelkammer (70) unterhalb des Trägheitsabscheiders (22; 22') angeordnet ist.

3. Bremsstaubfiltersystem (10) nach einem der obigen Ansprüche, wobei das Abscheidergehäuse (48) eine abnehmbare Abdeckung (74) für die Partikelsammelkammer (70) umfasst.

4. Bremsstaubfiltersystem (10) nach einem der obigen Ansprüche, wobei die Luftstromerzeugungseinrichtung (26) stromabwärts des Partikelfilterelements (24) angeordnet ist.

5. Bremsstaubfiltersystem (10) nach einem der obigen Ansprüche, wobei das Partikelfilterelement (24) einen Grobfiltermediumkörper (38) und einen Feinfiltermediumkörper (40) umfasst, der stromabwärts des Grobfiltermedienkörpers (38) angeordnet ist.

6. Bremsstaubfiltersystem (10) nach einem der obigen Ansprüche, wobei das Partikelfilterelement (24) in einem Filtergehäuse (34) aufgenommen ist und
das Filtergehäuse (34) mindestens eine mit der Kanalanordnung (28) verbundene Anschlussöffnung (36) umfasst.

7. Bremsstaubfiltersystem (10) nach einem der obigen Ansprüche, wobei die mindestens eine Saugöffnung (20) an einer Saughalterung (18) angeordnet ist, die zumindest teilweise eine Bremsscheibe (14) umgreift.

8. Bremsstaubfiltersystem (10) nach einem der obigen Ansprüche, wobei der Trägheitsabscheider (22) mindestens einen Zyklonabscheider (58) umfasst.

9. Bremsstaubfiltersystem (10) nach Anspruch 8, wobei der Rohlufteinlass (44) über mehrere Strömungsfenster (62) fluidisch mit mehreren Zyklonabscheidern (58) verbunden ist und
die Vielzahl an Zyklonabscheidern (58) um den Rohlufteinlass (44) herum angeordnet sind.

10. Bremsstaubfiltersystem (10) nach einem der obigen Ansprüche, wobei der Trägheitsabscheider (22') eine Düsenstruktur (80), die fluidisch mit dem Rohlufteinlass (44) gekoppelt ist, und mindestens eine Prallstruktur (86) umfasst, die so angeordnet ist, dass sie vom Luftstrom nach dem Durchströmen der Düsenstruktur (80) getroffen wird.

11. Bremsstaubfiltersystem (10) nach Anspruch 10, wobei die Düsenstruktur (80) ein Mittelrohr (76) mit radial ausgerichteten Düsenlöchern (82) umfasst.

12. Bremsstaubfiltersystem (10) nach Anspruch 11, wobei die mindestens eine Prallstruktur (86) das Mittelrohr (76) umgibt.

13. Bremsstaubfiltersystem (10) nach einem der Ansprüche 10 bis 12, wobei die mindestens eine Prallstruktur (86) Dorne (90) umfasst, die zur Düsenstruktur (80) hin ausgerichtet sind.

## Revendications

1. Système de filtre à poussière de frein (10) destiné à un véhicule, le système de filtre à poussière de frein (10) comprenant:
au moins un orifice d'aspiration (20) conçu pour être positionné près d'un ensemble frein de roue (12) du véhicule dans un état installé du système de filtre à poussière de frein (10);
un agencement de conduit (28);
un dispositif de génération de flux d'air (26) conçu pour générer un flux d'air à partir de l'orifice d'aspiration (20), au moins au nombre d'un, à travers l'agencement de conduit (28) en direction du dispositif de génération de flux d'air (26);
un élément de filtre à particules (24) couplé fluidiquement à l'agencement de conduit (28) et agencé en aval de l'orifice d'aspiration (20), au moins au nombre d'un, et
un séparateur inertiel (22; 22') couplé fluidiquement à l'agencement de conduit (28) et agencé en amont de l'élément de filtre à particules (24) et en aval de de l'orifice d'aspiration (20), au moins au nombre d'un, le séparateur inertiel (22; 22') comprenant:
une entrée d'air brut (44) pour le flux d'air provenant de l'orifice d'aspiration (20), au moins au nombre d'un;
au moins une sortie de particules (68) pour des particules qui sont séparées du flux d'air par le séparateur inertiel (22; 22'); et
au moins une sortie d'air (54) pour le flux d'air en direction de l'élément de filtre à particules (24),
dans lequel la sortie de particules (68) est raccordée à une chambre de collecte de particules (70),
dans lequel le séparateur inertiel (22; 22') est reçu dans un logement de séparateur (48), et dans lequel le logement de séparateur (48) comprend l'entrée d'air brut (44) et la sortie d'air (54), au moins au nombre d'une; et
**caractérisé en ce que**
l'entrée d'air brut (44) et la sortie d'air (54), au moins au nombre d'une, sont comprises au niveau d'un côté supérieur (46) du logement de séparateur (48).

2. Système de filtre à poussière de frein (10) selon la revendication 1, dans lequel la chambre de collecte de particules (70) est agencée en dessous du séparateur inertiel (22; 22').

3. Système de filtre à poussière de frein (10) selon l'une quelconque des revendications précédentes, dans lequel le logement de séparateur (48) comprend un couvercle amovible (74) pour la chambre de collecte de particules (70).

4. Système de filtre à poussière de frein (10)selon l'une quelconque des revendications précédentes, dans lequel le dispositif de génération de flux d'air (26) est agencé en aval de l'élément de filtre à particules (24).

5. Système de filtre à poussière de frein (10) selon l'une quelconque des revendications précédentes, dans lequel l'élément de filtre à particules (24) comprend un corps de milieu filtrant grossier (38) et un corps de milieu filtrant fin (40) agencé en aval du corps de milieu filtrant grossier (38).

6. Système de filtre à poussière de frein (10) selon l'une quelconque des revendications précédentes, dans lequel l'élément de filtre à particules (24) est reçu dans un logement de filtre (34), et
le logement de filtre (34) comprend au moins un orifice de raccordement (36) couplé à l'agencement de conduit (28).

7. Système de filtre à poussière de frein (10) selon l'une quelconque des revendications précédentes, dans lequel l'orifice d'aspiration (20), au moins au nombre d'un, est agencé au niveau d'un support d'aspiration (18) venant au moins partiellement en prise autour d'un disque de frein (14).

8. Système de filtre à poussière de frein (10) selon l'une quelconque des revendications précédentes, dans lequel le séparateur inertiel (22) comprend au moins un séparateur à cyclone (58).

9. Système de filtre à poussière de frein (10) selon la revendication 8, dans lequel l'entrée d'air brut (44) est couplée fluidiquement à de multiples séparateurs à cyclone (58) par le biais de multiples fenêtres de flux (62), et
les multiples séparateurs à cyclone (58) sont agencés autour de l'entrée d'air brut (44).

10. Système de filtre à poussière de frein (10) selon l'une quelconque des revendications précédentes, dans lequel le séparateur inertiel (22') comprend une structure de buse (80) couplée fluidiquement à l'entrée d'air brut (44), et au moins une structure de déflecteur (86) agencée pour être rencontrée par le flux d'air après passage à travers la structure de buse (80).

11. Système de filtre à poussière de frein (10) selon la revendication 10, dans lequel la structure de buse (80) comprend un tuyau central (76) avec des trous de buse (82) orientés radialement.

12. Système de filtre à poussière de frein (10) selon la revendication 11, dans lequel le déflecteur (86), au moins au nombre d'un, entoure le tuyau central (76).

13. Système de filtre à poussière de frein (10) selon l'une quelconque des revendications 10 à 12, dans lequel la structure de déflecteur (86), au moins au nombre d'une, comprend des pointes (90) faisant face vers la structure de buse (80).
